# EUROPÄISCHE PATENTSCHRIFT

(11) **EP 0 592 702 B1**
(45) Veröffentlichungstag und Bekanntmachung des Hinweises auf die Patenterteilung: **28.02.1996**
(21) Anmeldenummer: 92117406.6
(22) Anmeldetag: 12.10.1992
(51) Int. Cl.: B29B 7/76

(54) **Verfahren und Vorrichtung zum Mischen reaktiver Kunststoffkomponenten**
Method and device for mixing reactive plastic components
Procédé et dispositif pour mélanger des composants de matière plastique réactifs

(43) Veröffentlichungstag der Anmeldung: 20.04.1994
(73) Patentinhaber: Krauss-Maffei Aktiengesellschaft, D-80997 München (DE)
(72) Erfinder: Söchtig, Wolfgang, Dipl.-Ing., W-8034 Germering (DE)

(56) Entgegenhaltungen:
- EP-A- 0 498 227
- FR-A- 2 345 285
- PATENT ABSTRACTS OF JAPAN vol. 5, no. 206 (M-104)(878) 26. Dezember 1981 & JP-A-56 123 850

## Beschreibung

Die Erfindung bezieht sich auf ein Verfahren und eine Vorrichtung zum Mischen von mindestens zwei miteinander reagierenden Kunststoffkomponenten gemäß Oberbegriff des Anspruchs 1.

Aus der DE-PS 32 39 551 ist eine Vorrichtung bekannt, mit der für ein bestimmtes Formteil eine ausreichende Mischgüte der miteinander reagierenden Kunststoffkomponenten erreicht werden kann. Danach ist es erforderlich, daß der Reinigungskolben in einer bestimmten Position eingestellt wird, in der die Austrittsöffnung der Mischkammer unter Bildung eines Drosselspaltes teilweise freigegeben ist. Die Weite des Drosselspaltes bzw. die Position des Reinigungskolbens wird dabei entsprechend der für das zu spritzende Formteil erforderlichen Austragsleistung empirisch ermittelt und hydraulisch oder mittels eines manuell verstellbaren Anschlags eingestellt.

Dieses bisherige Verfahren gewährleistet zwar für ein bestimmtes Formteil bzw. für eine bestimmte Austragsleistung eine optimale Qualität des Produkts, hat Jedoch den Nachteil, daß jede Veränderung der Austragsleistung, wie sie z.B. bei der Produktion unterschiedlich großer Formteile mit einem Mischkopf notwendig wird, bei konstanter Weite des Drosselspalts zu deutlich geringerer Qualität des Formteils führt. Eine Veränderung der Drosselspaltweite hingegen hat den Nachteil, daß dieser Vorgang stets eine empirische Ermittlung und Einstellung der optimalen Drosselspaltweite erfordert.

Der Erfindung liegt daher die Aufgabe zugrunde, ein Verfahren und eine Vorrichtung der genannten Art so zu verbessern, daß bei in wechselnder Abfolge zu verändernden Austragsleistungen Produktionsergebnisse gleich guter Qualität erzeugt werden können.

Die Lösung dieser Aufgabe wird erfindungsgemäß mit dem Verfahren nach Anspruch 1 erreicht.

Die Erfindung geht dabei von der Erkenntnis aus, daß bei Konstanthaltung des Mischkammer-Innendruckes stets, d.h. unabhängig von der jeweiligen Austragsleistung, die für die erforderliche Mischgüte der miteinander reagierenden Kunststoffkomponenten optimalen Druckververhältnisse herrschen. Damit ist nämlich zum einen sichergestellt, daß für die Vorvermischung, die beim Aufeinanderprallen der Kunststoffkomponenten in der Mischkammer erfolgt, das richtige Druckverhältnis ΔP₁ zwischen dem Druck in den Komponentenzulaufleitungen und in der Mischkammer herrscht. Zum anderen ist sichergestellt, daß für die Nachvermischung, die am Drosselspalt erfolgt, der richtige Staudruck bzw. das richtige Druckverhältnis ΔP₂ zwischen dem Druck in der Mischkammer und dem Druck in der Beruhigungskammer herrscht.

Eine Veränderung dieser beiden Druckverhältnisse ΔP₁ und ΔP₂, etwa durch Steigerung der Austragsleistung durch die die Komponenten fördernde Pumpeneinrichtung bei unverändertem Drosselspalt, kann zwar dazu führen, daß die Vorvermischung oder die Nachvermischung geringfügig verbessert wird, insgesamt stellt sich jedoch eine nicht ausreichende Mischgüte ein, die zu einer Verschlechterung der Produktqualität führt.

Nach der Erfindung hingegen bleibt die Wechselbeziehung zwischen den beiden Druckverhältnissen ΔP₁ und ΔP₂ auch nach Veränderung der Austragsleistung unverändert und sorgt somit für gleichbleibende Produktqualität.

Eine vorteilhafte Vorrichtung zur Durchführung des erfindungsgemäßen Verfahrens ergibt sich aus den Ansprüchen 2 und 3.

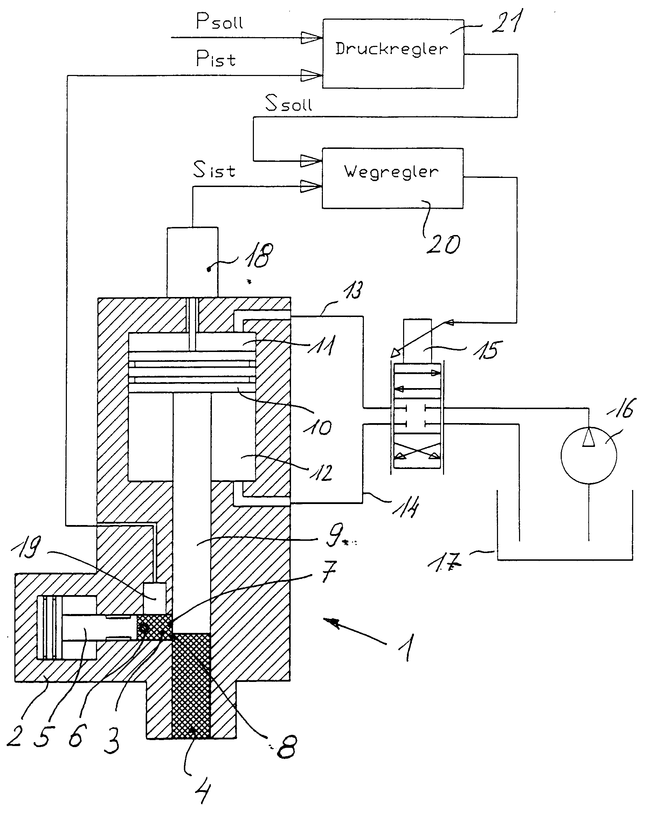

Ein Ausführungsbeispiel der Erfindung wird nachfolgend anhand der Zeichnung näher erläutert.

Die Zeichnung zeigt in schematischer Darstellung den Schnitt durch einen Mischkopf 1, in dem miteinander chemisch reagierende Kunststoffkomponenten gemischt werden können und mit dem das erhaltene Komponentengemisch in Spritzformen zur Herstellung von Formteilen gespritzt werden kann.

Der Mischkopf 1 weist ein Mischkopfgehäuse 2 auf, das eine Mischkammer 3 und eine dazu im rechten Winkel angeordnete Beruhigungskammer 4 umschließt. In der Mischkammer 3 ist ein längs der Mischkammerachse verschiebbarer Steuerkolben 5 angeordnet, der sich in der dargestellten Position in der Mischstellung befindet, in der die Komponentenzulauföffnungen 6 freigegeben sind. In der Figur ist wegen der Schnittdarstellung nur eine der ansonsten zwei gegenüberliegenden Komponentenzulauföffnungen 6 dargestellt.

Die Komponentenzulauföffnugnen 6 führen über Komponentenzulaufleitungen zu einer Pumpeneinrichtung (nicht dargestellt) mit variabler Förderleistung, die der jeweils gewünschten Austragsleistung an Kunststoff-Komponentengemisch entspricht.

Die Austrittsöffnung 7 der Mischkammer 3 ist unter Bildung eines Drosselspaltes 8 teilweise durch einen Reinigungskolben 9 verschlossen, der in der Beruhigungskammer 4 angeordnet und mittels eines Betätigungskolbens 10 zwischen einer Drosselstellung und einer Ausstoßstellung (nicht dargestellt) verschiebbar ist.

Der Betätigungskolben 10 unterteilt einen hydraulischen Stellzylinder in einen schließseitigen Zylinderraum 11 und in einen öffnungsseitigen Zylinderraum 12. Beide Zylinderräume 11 und 12 sind über Leitungen 13 und 14 und mittels eines aus einem 4/3-Wegeventil bestehenden Servoventil 15 wechselweise mit einer Druckmittelquelle 16 oder einem Tank 17 verbindbar.

Die Position des Betätigungskolbens 10 und damit auch die Weite des Drosselspaltes 8 ist über ein Wegaufnehmersystem 18 erfaßbar. Der Druck in der Mischkammer 3 ist über einen Druckaufnehmer 19 erfaßbar.

Der vorgestellte Mischkopf 1 ist erfindungsgemäß mittels der nachfolgend beschriebenen Regeleinrichtung so zu betreiben, daß bei von Spritzvorgang zu Spritzvorgang wechselnden Austragsleistungen durch Auf- und Zusteuerung des Drosselspaltes 8 in der Mischkammer 3 immer ein konstanter Druck aufrechterhalten wird, sodaß Formteile unterschiedlicher Größe auch bei unmittelbar aufeinanderfolgenden Spritzvorgängen stets gleich gute Qualität aufweisen. Hierzu wird zunächst die Position des Reinigungskolbens 9 und damit die Weite des Drosselspaltes 8 mittels des Wegaufnehmersystems 18 gemessen und in Form eines Drosselwertes S_{IST} an einen Wegregler 20 weitergegeben. Dieser führt einen Soll-Istwertvergleich durch und steuert entsprechend der Regelabweichung das Servoventil 15 an. Mit diesem Teil-Regelkreis kann der Reinigungskolben 9 exakt in der Sollposition gehalten werden, die der gewünschten Drosselspaltstellung S_{SOLL} entspricht.

Die Sollposition hingegen wird von einem übergeordneten Regelkreis ermittelt, der aus dem Druckaufnehmer 19 besteht, der während des Spritzvorganges den Druckistwert P_{IST} in der Mischkammer 3 mißt und in einen Druckregler 21 eingibt, in dem nach einem Soll-Istwert-Vergleich mit einem vorgegebenen Drucksollwert P_{SOLL} ein der gewünschten Sollposition entsprechender Drosselsollwert S_{SOLL} erzeugt wird.

## Patentansprüche

1. Verfahren zum intervallweisen Mischen von mindestens zwei miteinander reagierenden Kunststoffkomponenten in einer Mischkammer (3), bei dem in einer Vormischphase die Komponenten, gefördert von einer Pumpeneinrichtung mit variabler Fördermenge und gesteuert von einem in der Mischkammer reversierbar angeordneten Steuerkolben (5), unter hohem Druck und gegeneinandergerichtet in die Mischkammer (3) eingespritzt werden, und bei dem in einer Nachmischphase das Komponentengemisch beim Übergang von der Austrittsöffnung der Mischkammer (3) in eine vorzugsweise im rechten Winkel dazu nachgeordnete Beruhigungskammer (4) einem Staudruck ausgesetzt wird, der dadurch hervorgerufen wird, daß ein in der Beruhigungskammer (4) reversierbar angeordneter Reinigungskolben (9) die Austrittsöffnung der Mischkammer unter Bildung eines Drosselspaltes (8) teilweise freigibt, wobei das Komponentengemisch nach dem Durchlauf durch die Beruhigungskammer (4) in die Spritzform ausgetragen wird, **dadurch gekennzeichnet**, daß der Innendruck der Mischkammer (3) nach den Maßgaben konstant gehalten wird, daß die die Drosselstellung des Reinigungskolbens (9) repräsentierenden Drosselistwerte S_{IST} über ein Wegaufnehmersystem (18) laufend erfaßt, in einem Wegregler (20) mit die Drosselsollposition repräsentierenden Drosselsollwerten S_{SOLL} verglichen und entsprechend der Regelabweichung die Drosselstellung nachgeregelt wird, wobei die Drosselsollwerte S_{SOLL} in einem Druckregler (21) durch Vergleich der laufend von einem Druckaufnehmer (19) erfaßten Druckistwerte P_{IST} des Innendruckes der Mischkammer (3) mit einem vorgegebenen Drucksollwert P_{SOLL} erzeugt werden.

2. Vorrichtung zur Durchführung des Verfahrens nach Anspruch 1, **dadurch gekennzeichnet,** daß der Reinigungskolben (9) mittels einer von einem Servoventil (15) steuerbaren Hydraulikeinrichtung verstellbar ist, der Stellweg des Reinigungskolbens (9) bzw. die Weite des Drosselspaltes (8) mittels eines Wegaufnehmersystems (18) erfaßbar ist und der Innendruck in der Mischkammer (3) mittels eines Druckaufnehmers (19) erfaßbar ist, wobei ein aus dem Wegaufnehmersystem (18), einem Wegregler (20) und dem Servoventil (15) bestehender Teil-Regelkreis vorgesehen ist, in dem das Servoventil (15) nach der Maßgabe der Stellgröße aus dem Wegregler (20) ansteuerbar ist, in dem ein Ist-Sollwert-Vergleich zwischen dem vom Wegaufnehmersystem (18) erzeugten Meßwert S_{IST} und einem Drosselsollwert S_{SOLL} erfolgt, und wobei ein übergeordneter Regelkreis vorgesehen ist, in dem vom Druckregler (21) nach einem Ist-Sollwert-Vergleich zwischen dem vom Druckaufnehmer (19) erzeugten Meßwert P_{IST} und einem vorgegebenen Drucksollwert P_{SOLL} ein Drosselsollwert S_{SOLL} erzeugt wird.

3. Vorrichtung nach Anspruch 2, **dadurch gekennzeichnet,** daß die Hydraulikeinrichtung aus einem doppelt wirkenden Betätigungskolben (10) für den Reinigungskolben (9) besteht, dessen Wirkflächen, gesteuert von einem vom Servoventil (15) betätigten 4/3 Wegeventil, wechselweise mit Druckmittel aus einer Druckmittelquelle (16) beaufschlagbar oder drucklos zu einem Tank (17) schaltbar sind.

## Claims

1. Process for mixing at intervals at least two reactive plastic components in a mixing chamber (3), in which in a premixing phase the components, conveyed by a pump device with variable delivery rate and controlled by a control piston (5) arranged reversibly in the mixing chamber, are injected into the mixing chamber (3) at high pressure and towards one another, and in which in a post-mixing phase the mixture of components, on passing from the outlet opening of the mixing chamber (3) into a settling chamber (4) preferably arranged at right angles thereto, is subjected to dynamic pressure, which is created by a cleaning piston (9) arranged reversibly in the settling chamber (4) partly opening the outlet opening of the mixing chamber, thereby forming a choke gap (8), whereby the mixture of components, after passing through the settling chamber (4), is carried into the injection mould, characterised in that the internal pressure in the mixing chamber (3) is held constant according to requirements, the choke actual value S_{actual} representing the choke position of the cleaning piston (9) is continuously detected by a displacement pick-up system (18), is compared in a displacement control (20) with the choke required values S_{required} representing the choke required position and the choke position is adjusted according to the control deviation, whereby the choke required values S_{required} are produced in a pressure control (21) by comparing the pressure actual values P_{actual} of the internal pressure in the mixing chamber (3) continuously detected by a pressure pick-up (19) with a predetermined pressure required value P_{required}.

2. Device for performing the process according to Claim 1, characterised in that the cleaning piston (9) can be adjusted by means of a hydraulic device controllable by a servo-valve (15), the displacement of the cleaning piston (9) or the width of the choke gap (8) can be detected by means of a displacement pick-up system (18) and the internal pressure in the mixing chamber (3) can be detected by a pressure pick-up (19), whereby a part control loop is provided comprising a displacement pick-up system (18), a displacement control (20) and the servo-valve (15) in which the servo-valve (15) can be controlled according to the stipulation for displacement from the displacement control (20) in which an actual-required comparison between the value S_{actual} produced by the displacement pick-up system (18) and a choke required value S_{required} is made, and whereby a higher control loop is provided in which a choke required value S_{required} is produced by the pressure control (21), after an actual-required comparison between the P_{actual} produced by the pressure pick-up (19) and a given pressure required value P_{required}.

3. Device according to Claim 2, characterised in that the hydraulic device comprises a double acting operating piston (10) for the cleaning piston (9) the active surfaces of which controlled by a 4/3 displacement valve activated by a servo-valve (15), can be optionally loaded by compression means from a compression means source (16) or switched without pressure to a tank (17).

## Revendications

1. Procédé pour mélanger, intervalle de temps par intervalle de temps, au moins deux composants de matière plastique réagissant l'un avec l'autre dans une chambre de mélange (3), dans lequel, dans une phase de prémélange les composants, transportés à débit variable par un dispositif de pompage et commandés par un piston de commande (5) disposé, avec mouvement de va-et-vient, dans la chambre de mélange, sont injectés sous haute pression et dirigés l'un vers l'autre, dans la chambre de mélange (3), et dans lequel, dans une phase de postmélange, le mélange des composants, lors du passage, par l'ouverture de sortie de la chambre de mélange (3), dans une chambre de stabilisation (4) qui lui est de préférence disposée à angle droit, est exposé à une contre-pression provoquée par le fait qu'un piston de purge (9), disposé, avec mouvement de va-et-vient, dans la chambre de stabilisation (4), libère l'ouverture de sortie de la chambre de mélange en formant une fente de réglage (8), le mélange des composants étant expédié dans le moule d'injection après passage à travers la chambre de stabilisation (4), caractérisé par le fait que la pression intérieure régnant dans la chambre de mélange (3) est maintenue constante grâce aux mesures consistant en ce que les valeurs réelles S_{réel} de la fente de réglage, représentant la position de réglage du piston de purge (9), sont saisies en permanence par un système (18) de détection de la course, sont comparées, dans un régulateur de course (20), avec les valeurs prescrites S_{prescrit} de la fente de réglage représentant la position prescrite de la fente de réglage et que la position de la fente de réglage fait l'objet d'une reprise de réglage en fonction de l'écart de réglage, les valeur prescrites S_{prescrit} de la fente de réglage étant produites dans un régulateur de pression (21) par comparaison des valeurs réelles P_{réel} saisies en permanence par un détecteur de pression (19), de la pression intérieure régnant dans la chambre de mélange (3) avec une valeur prescrite P_{prescrit} de la pression.

2. Dispositif pour la mise en oeuvre du procédé de la revendication 1, caractérisé par le fait que le piston de purge (9) est réglable au moyen d'un dispositif hydraulique pouvant être commandé par une servo-vanne (15), que la course du piston de purge (9) ou la valeur de la fente de réglage (8) peuvent être saisies au moyen d'un système (18) détecteur de la course et que la pression intérieure régnant dans la chambre de mélange (3) peut être saisie au moyen d'un détecteur de pression (9), dispositif dans lequel est prévu un circuit de régulation partiel qui est constitué du système (18) de détection de la course, d'un régulateur de course (20) et de la servo-vanne (15) et dans lequel la servo-vanne (15) peut être commandée en fonction de la grandeur réglante fournie par le régulateur de course (20) dans lequel se fait une comparaison valeur réelle-valeur prescrite entre la valeur mesurée S_{réel}, fournie par le système (18) de détection de la course, et une valeur prescrite S_{prescrit} de la fente de réglage, et dans lequel est prévu un circuit de régulation principal dans lequel une valeur prescrite S_{prescrit} de la fente de réglage est produite par le régulateur de pression (21) en fonction d'une comparaison valeur réelle-valeur prescrite entre la valeur mesurée P_{réel}, fournie par le détecteur de pression (19), et une valeur prescrite P_{prescrit}.

3. Dispositif selon la revendication 2, caractérisé par le fait que le dispositif hydraulique est constitué, pour le piston de purge (9), d'un piston de manoeuvre (10) à double action dont les surfaces actives, commandées par un robinet 4/3 voies manoeuvré par la servo-vanne (15), peuvent alternativement être contraintes par du fluide sous pression provenant d'une source (16) de fluide sous pression ou être reliées, sans pression, à un réservoir (17).
